# EUROPÄISCHE PATENTANMELDUNG

(11) **EP 2 351 700 A1**
(43) Veröffentlichungstag der Anmeldung: **03.08.2011**
(21) Anmeldenummer: 11159773.8
(22) Anmeldetag: 08.01.2008
(51) Int. Cl.: B67C 3/00

(54) **Reinigung von Getränkeabfüllanlagen**

(30) Priorität: 08.01.2007 DE 102007001294; 13.04.2007 DE 102007017523
(62) Teilanmeldung aus: 08701033.6
(71) Anmelder: aquagroup AG, 93055 Regensburg (DE)
(72) Erfinder: Saefkow, Michael, Dr., 74189 Weinsberg (DE); Philipps, André, 93059 Regensburg (DE); Czech, Manuel, 93093 Donaustauf (DE)
(74) Vertreter: Bardehle, Heinz

(57) **Zusammenfassung**

In einem Verfahren zur Reinigung von Getränkeabfüllanlagen werden eine oder mehrere Getränkeabfüllvorrichtungen (30) mit einem Abfüllkopf (32) in einer Getränkeanbfüllkammer (20) der Getränkeabfüllanlage (20) während des Betriebs der Getränkeabfüllanlage kontinuierlich oder intermittierend mit einem wässrigen, gesundheitlich unbedenklichen, bei Umgebungstemperatur vorliegenden Reinigungsmedium (110) gespült. Bevorzugt werden auch Behälter (40a), die in der Getränkeabfüllkammer (20) mit einem Getränk (35) gefüllt werden, und/oder eine Fördereinrichtung (60) zum Transportieren der Behälter bei ihrer Bewegung durch die Getränkeabfüllkammer (20) kontinuierlich oder intermittierend mit dem Reinigungsmedium (110) gespült. Das Reinigungsmedium wirkt bevorzugt desinfizierend.

## Beschreibung

Die vorliegende Erfindung betrifft ein Verfahren zur Reinigung von Getränkeabfüllanlagen.

Getränkeabfüllanlagen unterliegen einer fortwährenden Kontamination durch das abzufüllende Getränk, zum Beispiel weil zwischen zwei AbfüllVorgängen aus dem Abfüllkopf Getränk nachtropft, der Behälter überläuft oder das Getränk aus dem Behälter herausschäumt und dergleichen mehr. Die feuchten, kontaminierten Bereiche der Abfüllanlage bilden einen idealen Nährboden für Mikroorganismen aller Art. Es ist also sowohl unter dem Gesichtspunkt der Ästhetik als auch der Hygiene erforderlich, die Teile der Abfüllanlage, die einer Kontamination unterliegen, zu reinigen, um eine hygienisch einwandfreie Abfüllung zu gewährleisten.

Bisher wurde die Reinigung derartiger Anlagen mittels des sogenannten "Schwallens" bewerkstelligt. Dazu wird beispielsweise alle 1 bis 4 Stunden der Betrieb der Maschine unterbrochen und mittels Düsen, z.B. Breitstrahldüsen, einige Minuten lang, z.B. 5 Minuten lang, heißes, beispielsweise 85 °C heißes Wasser auf die gesamten Maschinenteile gespritzt. Die Düsen sind so angeordnet, dass damit alle wesentlichen Teile der Abfüllvorrichtung besprüht werden können.

Dieses Schwallen weist einige erhebliche Nachteile auf. Erstens muss die Anlage stillgelegt werden, um die Reinigung durchzuführen; dies ist ein wirtschaftlicher Nachteil. Weiter stellt das sehr heiße Wasser eine potenzielle Gefahr für Menschen dar. Heißes Wasser beschädigt auch Gummi- und Kunststoffteile der Abüllfüllvorrichtung und der zugehörigen Transportbänder. Außerdem belastet der beim Schwallen entstehende Wasserdampf den Raum und führt an kühleren Stellen zur Bildung von Kondensat, welches das Wachstum von Mikroorganismen fördert.

Eine wünschenswerte Desinfektion ist ebenfalls nicht gewährleistet. Das heiße versprühte Wasser kühlt sich nach dem Auftreffen auf die Bauteile stark ab und verliert so seine desinfizierende Wirkung. In der Praxis hat es sich gezeigt, dass nur 60 bis 70 % der vorhandenen Mikroorganismen durch das Schwallen abgetötet werden. Von einer Desinfektion spricht man aber erst bei einer Abtötungsrate von log 5, d.h. einer Desinfektionswirkung, bei der von 100 000 Mikroorganismen ein einziger übrig bleibt.

Aufgabe der Erfindung war es, ein alternatives Verfahren zur Reinigung von Getränkeabfüllanlagen zu schaffen.

Diese Aufgabe wird durch das Verfahren nach Anspruch 1 erfüllt.

Die Unteransprüche geben bevorzugte Ausführungsformen der Erfindung an.

In der vorliegenden Erfindung wird die Reinigung der durch das Produkt (Getränk) und durch Mikroorganismen kontaminierten Teile der Abfüllanlage kontinuierlich oder intermittierend (in Zeitabständen) während des Betriebs der Abfüllanlage vorgenommen. Die bereits für die Schwallung in einer Anlage installierten Düsen können dabei benutzt werden. Die Installation von weiteren Düsen zum Besprühen zusätzlicher Anlagenteile und des Behälters, in den das Getränk zu füllen ist, gefüllt wird oder gefüllt worden ist, sind gegebenenfalls zusätzlich zu installieren.

Insbesondere werden erfindungsgemäß die Abfüllköpfe während des gesamten Füllbetriebs, d.h. vor dem Abfüllvorgang, während des Abfüllvorgangs und nach dem Abfüllvorgang, bei laufendem Betrieb der Abfüllanlage kontinuierlich oder intermittierend abgesprüht, d.h. bei im Kreis geführten Abfüllanlagen der gesamte äußere Kreis des Füllerkarussells, wo die Behälter abgefüllt werden. Ein, meherere oder bevorzugt alle Abfüllköpfe werden auf diese Weise kontinuierlich oder intermittierend abgespült.

Das Reinigungsmedium wird bei Umgebungstemperatur versprüht. Es handelt sich dabei um ein von nativem Wasser verschiedenes, wässriges, gesundheitlich unbedenkliches Reinigungsmedium. Unter "gesundheitlich unbedenklich" versteht man, dass eine Einnahme des Reinigungsmittels durch einen Menschen nicht signifikant gesundheitsgefährdender ist als die Einnahme von sauberem nativem Wasser, d.h. Wasser, wie es aus der Natur (gegebenenfalls nach Reinigung) gewonnen wird, z.B. Leitungs- oder Mineralwasser; bevorzugt hat das Reinigungsmedium Trinkwasserqualität.

Da das Reinigungsmedium gesundheitlich unbedenklich ist, können auch die nahe der Behälteröffnung vorliegenden Teile der Behälter, z.B. die Flaschenhälse bei Flaschen, mit dem Reinigungsmedium gespült werden. Das gleiche gilt für die Teile der Abfüllvorrichtung, die mit dem Getränk in Kontakt kommen, beispielsweise die Abfüllköpfe und deren Dichtungen. Bevorzugt wird auch die Verschließeinheit kontinuierlich oder intermittierend mit dem Reiningungsmedium besprüht. Es ist vollkommen unschädlich, wenn Spuren des oben definierten Reinigungsmediums in die Getränke gelangen.

Die Reinigung, d.h. jeder hierin beschriebene Reinigungsvorgang, kann kontinuierlich oder intermittierend in geeigneten Zeitintervallen vorgenommen werden. Die intermittierende Reinigung ist dann vorteilhaft, wenn Wasser eingespart werden soll. Dabei werden die Zeitintervalle durch den Verschmutzungsgrad der Anlage bestimmt. So könnte die Reinigung z.B. synchron alle 3, 5, 7, 10 Minuten für 30 Sekunden, 1 Minute, 2 Minuten vorgenommen werden.

Bei der Getränkeabfüllanlage und -Vorrichtung kann es sich um jede beliebige handeln. Im allgemeinen umfasst eine Getränkeabfüllanlage mindestens eine Getränkeabfüllvorrichtung mit einem Abfüllkopf, eine Fördereinrichtung für Flaschen, die gewöhnlich im Kreis geführt wird, und eine Vorrichtung zum Verschließen (Verschließeinheit) der gefüllten Behälter (z.B. mittels eines Kronkorkens, Schraubverschlusses, des Bodens der Dose usw.) die sich in Laufrichtung gesehen nach der Getränkeabfüllvorrichtung befindet. Natürlich kann die Getränkeabfüllanlage weitere Baugruppen bis hin zur vollautomatischen Zufuhr der leeren Behälter sowie zum vollautomatischen Verpacken der gefüllten Behälter z.B. in Kästen, Kartons usw. umfassen.

Als Fördereinrichtung können dabei Bänder, Förderketten, Gliederketten oder ähnliche Baugruppen dienen.

Bei den Behältern für die Getränke handelt es sich im Allgemeinen um Flaschen, Dosen oder auch kleine Fässer (z.B. für Wein oder Bier).

Die Fördereinrichtung wird bevorzugt innerhalb der Abfüllkammer intensiv mit dem Reinigungsmedium gespült. Es ist dann vorzuziehen, sie auch nach Verlassen der Abfüllkammer nochmals zu spülen. Ansonsten wird sie auf jeden Fall nach Verlassen der Abfüllkammer gespült. Das gleiche gilt für die Behälter.

Nach Verlassen der Abfüllkammer befinden sich auf der Oberseite der Fördereinrichtung (immer noch) Flüssigkeitsreste oder kontaminierte Bereiche, die Produkt enthalten können. Weiter kann aus den noch offenen Behältern durch die vom Band oder vom Zusammenstoß von Behältern auf dem Band verursachte Bewegung der Behälter weiteres Produkt aus diesen austreten. Da die Fördereinrichtung im Allgemeinen eine Gliederkette mit offenen Zwischenräumen ist, können diese Flüssigkeitsreste auf den darunter liegenden, zur Abfüllvorrichtung zurückkehrenden Teil der Fördereinrichtung (wenn sie im Kreis geführt wird) tropfen. Die Fördereinrichtung wird also bevorzugt nicht nur auf ihrer Oberseite, sondern auch auf ihrer Unterseite sowie auf der Ober- und Unterseite des darunterliegenden zurücklaufenden Teils der Fördereinrichtung zwischen Abfüllkammer und Vorrichtung zum Verschließen der Behälter gereinigt werden.

Es können natürlich auch Transportbänder mit geschlossener Oberfläche als Fördereinrichtung vorgesehen sein. Bei diesen ist im Allgemeinen nur die Oberseite des sich zu der Vorrichtung zum Verschließen der Behälter bewegenden Bandes zu reinigen.

Noch weiter bevorzugt wird die Fördereinrichtung, wenn sie im Kreis geführt wird, auf die gleiche Weise nochmals gereinigt, bevor sie in die Abfüllkammer zurückkehrt, um jegliche möglicherweise neu hinzugekommen Verunreinigungen zu entfernen.

Auch die Behälter werden bevorzugt in der Abfüllkammer mit dem Reinigungsmedium gespült. Dann werden sie zwischen Abfüllkammer und Vorrichtung zum Verschließen der Behälter bevorzugt nochmals von ihrem oberen Teil an abwärts (z.B. am Flaschenhals und darunter) gespült, um jegliche Getränkereste am Behälteräußeren zu entfernen, die in vielen Fällen klebrig sind, aber auch Brutstätte für schädliche Mikroorganismen sein können, welche unter Umständen ein Konsument aufnimmt. Wenn die Behälter nicht in der Abfüllkammer gespült werden, geschieht dies auf jeden Fall nach ihrem Austritt aus der Kammer.

Das Reinigungsmedium wird bevorzugt aus Düsen auf die zu reinigenden Gegenstände gesprüht. Je nach Bedarf kann es sich zum Beispiel um Breitstrahldüsen, Flachstrahldüsen, Fräsdüsen usw. handeln.

Zur Reinigung der Abfüllvorrichtung sind häufig bei in bereits in Betrieb genommenen Abfüllanlagen Breitstrahldüsen verfügbar, die früher zur Schwallung eingesetzt werden. Sie können im erfindungsgemäßen Verfahren verwendet werden. Für die Reinigung der Behälter und der Fördereinrichtung können zusätzliche Düsen installiert werden.

Für die Reinigung der Fördereinrichtung werden die nach oben weisenden Bereiche des Bandes (also des oberen, von der Abfülleinrichtung wegführenden Bereiche der Fördereinrichtung sowie des unteren, Richtung Abfülleinrichtung zurücklaufenden Bereiche der Fördereinrichtung) bevorzugt Flachstrahldüsen verwendet, die schräg auf die Oberfläche gerichtet sind, um die Verunreinigungen durch die Leerräume zwischen den Kettengliedern hindurch zu spülen, von wo sie nach unten tropfen. Dabei sollte die untere Flachstrahldüse stromabwärts (mit Bezug auf den unteren Bandteil) von der oberen Flachstrahldüse angeordnet sein, damit die Flüssigkeitsreste, die von der letztgenannten Düse auf den unteren Bandteil tropfen, von der zuerst genannten Düse entfernt werden können.

Die Düsen, welche die Unterseiten der Fördereinrichtung spülen, können, müssen aber nicht schräg gestellt werden.

Das Reinigungsmedium wird den Düsen nach Bedarf automatisch zudosiert. Der Ausdruck "nach Bedarf" soll anzeigen, dass z.B. an Stellen geringerer Kontamination das Reinigungsmedium unter geringerem Druck auf die kontaminierten Stellen gesprüht werden kann. Es hat sich herausgestellt, dass der Verbrauch an Reinigungsmedium bei bedarfsgerechter Dosierung geringer ist als der Wasserbedarf im Fall einer Reinigung durch Schwallung.

Das Reinigungsmedium wird bevorzugt durch Einmischen eines Reinigungskonzentrats in Leitungswasser hergestellt. Derartige Konzentrate können, wenn sie in einem verschlossenen, lichtgeschützten Behälter aufbewahrt werden, über längere Zeiträume gelagert werden.

Das Reinigungsmedium ist in der Regel ein desinfizierendes Reinigungsmedium. Es wurde bereits oben erwähnt, dass der Ausdruck "desinfizierend" dann verwendet wird, wenn die Rate der Entfernung der Mikroorganismen mindestens log 5 beträgt, d.h. , dass pro 100 000 vorhandenen Mikroorganismen nach Anwendung des Desinfektionsmittels (desinfizierenden Reinigungsmediums) höchstens einer übrig bleibt.

Ein desinfizierendes Reinigungsmedium kann z.B. ein oder mehrere Moleküle/Ionen/Radikale enthalten, die aus ClO-; ClO'; HClO; OH-; HO₂"; H₂O₂; O₃; S₂O₈^{2"}; Cl₂; Cl-; HO₂-; O₂; O₂-; 3O₂; ₁O₂; o- ; H₃O; H-; Cl₂O; ClO₂; HCl; Cl₂O₇; H₂SO₄; und HSO₃Cl ausgewählt sind. Der pH kann 2 bis 8, bevorzugt 7, betragen und das Redoxpotential kann +300 mV bis +1200 mV betragen.

Im Fall einer mit Fett oder Öl verunreinigten Transportvorrichtung kann zur Erhöhung ihrer Benetzbarkeit oder zur Bekämpfung thermophiler Sporen stromaufwärts zur Spülung mit dem vorstehenden Reinigungsmedium vorteilhaft eine Spülung mit einem basischen Reinigungsmittel vorgenommen werden. Dieses kann z.B. einen pH von 7 bis 13, ein Redoxpotential von -200 mV bis -1100 mV, bevorzugt -800 mV, aufweisen und ein oder mehrere Moleküle/Ionen/Radikale enthalten, die aus OH"; H₃"; O₂; H₂; HO₂; HO₂" und O₂" ausgewählt sind.

Bevorzugt handelt es sich bei dem Reinigungsmittel um das im Handel unter dem Handelsnamen NADES (Konzentrat) (aquagroup GmbH, Regensburg, Deutschland) erhältliche Reinigungskonzentrat. NADES (Konzentrat) enthält etwa 99,98 % Wasser und etwa 0,02 % (200 ppm) Oxidationsmittel, vor allem Natriumhypochlorit (<197,5 ppm) und Chlordioxid (<;2,5 ppm) bei pH « 7,0.

NADES (Konzentrat) kann in Ausnahmefällen bis zu 100%, d.h im Grenzfall als solches im erfindungsgemäßen Verfahren eingesetzt werden, häufiger bis zu 50 % des Reinigungsmediums ausmachen, wobei der Rest Wasser ist,- es wird aber im Allgemeinen Wasser (gewöhnlich Leitungswasser) zu 0,1 bis 10 % zugesetzt, um das in der Erfindung verwendete Reinigungsmedium zu erhalten. Es soll noch erwähnt werden, dass im Fall einer mit Fett oder Öl verunreinigten Transportvorrichtung, zur Erhöhung ihrer Benetzbarkeit oder zur Bekämpfung thermophiler Sporen stromaufwärts zur Spülung mit NADES (Konzentrat) vorteilhaft eine Spülung mit NADES Base (Konzentrat) oder einer Verdünnung desselben in Wasser vorgenommen werden kann.

NADES Base (Konzentrat) enthält neben Wasser 880 ppm (0,088 %) NaOH als Gesamtalkalinität und kann neben anderen reduzierenden Spezies Nitrit (14,79 ppm), Chlorid (11,70 ppm), Phosphat (11,48 ppm), Sulfat (7,89 ppm), Nitrat (1,14 ppm), Natrium (439,00) ppm und Kalium (3,60 ppm) enthalten. Aufgrund des geringen Gehalts an NaOH (0,088%) ist keine Gefährdung von Mensch, Tier oder Umwelt Durch NADES Base möglich. Daher fällt NADES Base auch nicht in die Gefahrstoffverordnung.

NADES Base (Konzentrat) kann in Konzentrationen bis zu 100% eingesetzt werden, wird aber im allgemeinen für Reinigungszwecke gewöhnlichem Wasser zu 0,1 bis 50% zugesetzt.

NADES Base und NADES können in speziellen Fällen auch als Mischung verwendet werden.

Eine Spülung mit einem neutralen Reinigungsmittel, z.B. NADES (Konzentrat) oder dessen Verdünnungen in Wasser stromabwärts von einer Spülung mit NADES Base enthaltendem Reinigungsmittel ist zu empfehlen.

Bei den Getränken, die in der Getränkeabfüllanlage abgefüllt werden, kann es sich um jedes beliebige Getränk handeln. Bier ist ein besonders bevorzugtes Getränk, da bei seiner Abfüllung wegen seines Schäumens im Allgemeinen eine besonders starke Kontamination der Anlage stattfindet. Andere Getränke, die während des erfindungsgemäßen Verfahrens abgefüllt werden können, sind beispielsweise Mineralwasser, Saft, Wein, Spirituosen, sonstige alkoholische Getränke (z.B. Alkopops), alkoholfreie Mischgetränke (darunter die sogenannten "Energy Drinks") und Milch.

Kurze Beschreibung der Figuren
Figur 1 zeigt eine schematische Seitenansicht einer Getränkeabfüllanlage mit einer durchsichtigen Getränkeabfüllkammer, in der sich eine 0 Getränkeabfüllvorrichtung befinden, eine Fördereinrichtung und eine angedeutete Verschlussstation für Getränkebehälter sowie verschiedenen Düsen zum Versprühen des Reinigungsmediums.
Figur 2 ist ein perspektivische Ansicht des Umkehrpunktes eines aus Kettengliedern bestehenden Transportbandes mit Düsen zum Versprühen von Reinigungsmedium.

Das erfindungsgemäße Verfahren wir nun anhand eines Ausführungsbeispiels näher beschrieben.

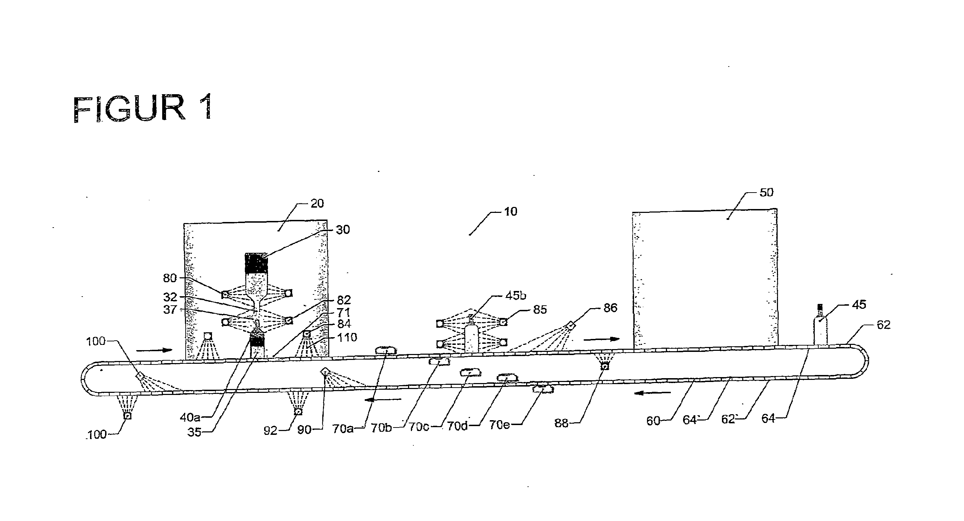

In Figur 1 ist schematisch eine Getränkeabfüllanlage 10 gezeigt. In einer Getränkeabfüllkammer 20, die häufig durchsichtig ist, befindet sich eine Getränkeabfüllvorrichtung 30, aus der über einen Abfüllkopf 32 ein Getränk 35 in Flaschen 40a (oder einen anderen Behälter) abgefüllt wird. Dabei kann Getränk 35 oder Schaum 37 aus der Flasche (40a) austreten, das bzw. der ein Transportband 60 kontaminiert 71. Auch nachtropfendes Getränk aus dem Abfüllkopf 32 kann das Band kontaminieren, während eine gefüllte Flasche 40b vom Abfüllkopf 32 weg befördert und eine leere Falsche (nicht gezeigt) unter den Abfüllkopf 32 transportiert wird.

Während des Abfüllvorganges wird aus Düsen 80, 82, 84, bei denen es sich um Breitstrahldüsen handeln kann, kontinuierlich Reinigungsmedium 110 auf die Abfüllvorrichtung 30 und deren Abfüllkopf 32 sowie auf die Flaschen 40a und das Transportband 60 gesprüht. Flüssige Reste 70a des mit Getränk gemischten Reinigungsmedium verbleiben auf der Oberfläche 62 des sich in Richtung des oberen Pfeils bewegenden Transportbandes 60.

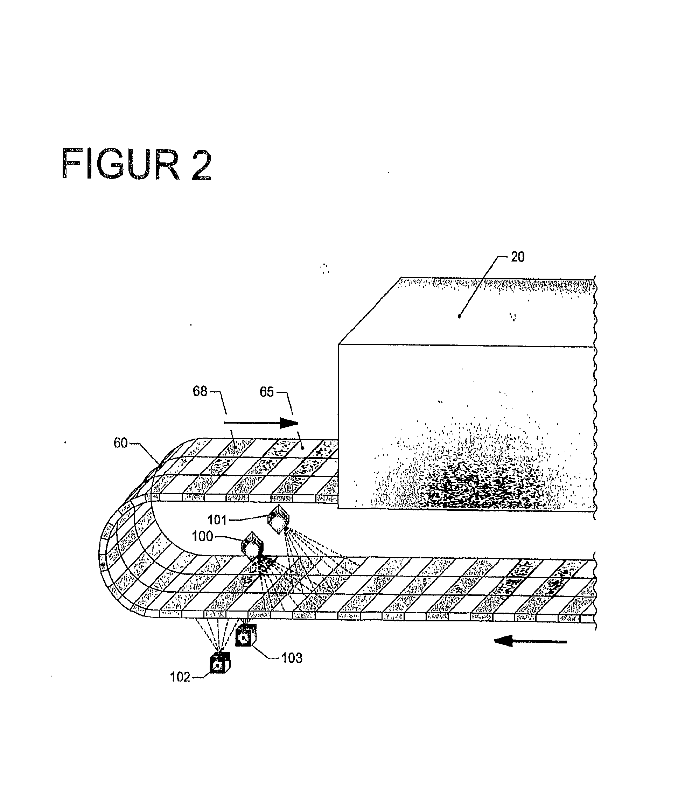

Da das Band 60 gewöhnlich aus Kettengliedern 68 aufgebaut ist, die Leerräume 65 enthalten, wie in Figur 2 gezeigt, können die flüssigen Reste 70b auf die Unterseite 64 des Transportbands 60 gelangen, von wo aus sie nach unten tropfen 70c und auf der Gegenseite 64' des gewendeten, sich nun in Richtung des unteren Pfeils bewegenden Bandes 60 (also die vorherige Unterseite 64) auftreffen können 70d. Von dort können sie weiter auf die Außenseite 62' des gewendeten Bandes (die vorherige Oberseite 62) gelangen und auf den Boden tropfen (nicht gezeigt).

Die gefüllten, aber unverschlossenen Flaschen 40 b werden auf dem Transportband ebenfalls in Richtung des oberen Pfeils zu einer Verschlussstation 50 bewegt. In der Verschlussstation 50 werden die Flaschen mit Korken, Kronkorken oder dergleichen verschlossen (nicht gezeigt). Die verschlossenen Flaschen 45 werden dann vom Band entfernt und in Kästen oder Kartons gepackt (nicht gezeigt). Auf dem Weg zur Verschlussstation 50 kann durch die Erschütterung der Flasche 40b durch das Band oder durch Aneinanderstoßen der Flaschen 40b weiteres Getränk oder weiterer Schaum (nicht gezeigt) aus der Flasche austreten.

Aus diesem Grund wird das Band 60 auf seinem Weg zur Verschlussstation 50 bzw. auf der Gegenseite von dieser weg weiter mit Reinigungsmedium 110 aus Düsen 86,88,90,92 besprüht. Die Düsen 86,90 und 100, welche auf die Oberseiten 64 und 64' des Transportbandes gerichtet sind, sind bevorzugt eine Flachstrahldüse, die schräg entgegengesetzt zur Bewegungsrichtung des Bandes ausgerichtet sind. Ein aus einer derartigen Düse 86,80,100 austretender Strahl mit Reinigungsmedium 110 trifft schräg auf die Kettenglieder 68 des Bandes auf, so dass die Flüssigkeitsreste 70a durch die Leerräume 65 zwischen den Kettengliedern 68 (siehe Figur 2) gespült werden und nach unten tropfen. Dabei sollte die Düse 90, welche die Oberseite 64' des gewendeten, zur Abfüllkammer zurücklaufenden Bandes besprüht, in Laufrichtung gesehen nach der die Oberseite 64 besprühenden Düse 86 sowie nach der die Unterseite 62' besprühenden Düse 88 angeordnet sein, um die von oben herabgetropften Flüssigkeitsreste 70d wegzuspülen. Die Unterseite 64 und die Außenseite 62' des Transportbandes können zum Beispiel mit Breitstrahldüsen 88,92 gespült werden. Statt der gezeigten einzelnen Düsen 86,88,90,92 können auch mehrere quer zur Laufrichtung nebeneinander angeordnete Einzeldüsen vorgesehen sein, die gemeinsam die Bandbreite überspannen.

Vor dem Wiedereintritt des in die Abfüllkammer zurückkehrenden Bandes wird dieses zum Beispiel vor dem Umkehrpunkt erneut mit Düsen 100, 101 und 102, 103 (siehe Figur 2) gespült. Die Düsen 100,101 und 102,103 sind jeweils quer zur Laufrichtung und parallel zu den Kettengliedern 68 angeordnet. Die Düsen 100, 101 sind wiederum als entgegensetzt zur Laufrichtung schräg gestellte Flachstrahldüsen gezeigt, während die Düsen 102, 103 als Breitstrahldüsen gezeigt sind.

## Patentansprüche

1. Verfahren zur Reinigung von Getränkeabfüllanlagen, bei dem eine oder mehrere Getränkeabfüllvorrichtungen (30) mit einem Abfüllkopf (32) in einer Getränkeabfüllkammer (20) der Getränkeabfüllanlage während des Betriebs der Getränkeabfüllanlage kontinuierlich oder intermittierend mit einem von nativem Wasser verschiedenen, wässrigen, gesundheitlich unbedenklichen, bei Umgebungstemperatur vorliegenden Reinigungsmedium (110) gespült werden.

2. Verfahren nach Anspruch 1, **dadurch gekennzeichnet, dass** auch Behälter (40a), die in der Getränkeabfüllkammer (20) mit einem Getränk (35) befüllt werden, kontinuierlich oder intermittierend während des Betriebs der Getränkeabfüllanlage in der Getränkeabfüllkammer (20) mit dem Reinigungsmedium (110) gespült werden.

3. Verfahren nach Anspruch 1 oder 2, **dadurch gekennzeichnet, dass** auch eine Fördereinrichtung (60) zum Transportieren der Behälter (40a) bei ihrer Bewegung durch die Getränkeabfüllkammer (20) kontinuierlich oder intermittierend mit Reinigungsmedium (110) gespült wird.

4. Verfahren nach einem der Ansprüche 1 bis 3, **dadurch gekennzeichnet, dass** es sich bei den Behältern (40a) um Flaschen, Dosen oder kleine Fässer handelt.

5. Verfahren nach einem der Ansprüche 1 bis 4, **dadurch gekennzeichnet, dass** die Fördereinrichtung (60) und die geförderten, gefüllten, unverschlossenen Behälter (40b) nach dem Verlassen der Abfüllkammer (20) kontinuierlich oder intermittierend während des Betriebs der Getränkeabfüllanlage mit dem Reinigungsmedium (110) gespült werden, wobei die Spülung gegebenenfalls eine weitere Spülung ist.

6. Verfahren nach einem der Ansprüche 1 bis 5, **dadurch gekennzeichnet, dass** die Fördereinrichtung (60) im Kreis geführt wird und vor ihrem Wiedereintritt in die Abfüllkammer (20) kontinuierlich oder intermittierend während des Betriebs der Getränkeabfüllanlage erneut gespült wird.

7. Verfahren nach einem der Ansprüche 1 bis 6, **dadurch gekennzeichnet, dass** das Reinigungsmedium (110) aus Düsen (82, 84, 85, 86, 88, 90, 92, 100, 101, 102, 103) auf die in einem der Ansprüche 1 bis 4 genannten zu reinigenden Gegenstände (30, 32, 40a, 40b, 60) gesprüht wird.

8. Verfahren nach einem der Ansprüche 1 bis 7, **dadurch gekennzeichnet, dass** das Reinigungsmedium (110) entsprechend seinem Bedarf in die Düsen (82, 84, 85, 86, 88, 90, 92, 100, 101, 102,103) eindosiert wird.

9. Verfahren nach einem der Ansprüche 1 bis 8, **dadurch gekennzeichnet, dass** das Reinigungsmedium (110) eine Mischung von Leitungswasser und einem Reinigungskonzentrat enthält.

10. Verfahren nach einem der Ansprüche 1 bis 9, **dadurch gekennzeichnet, dass** es sich bei dem Reinigungsmedium um ein desinfizierendes Reinigungsmedium handelt.

11. Verfahren nach einem der Ansprüche 1 bis 10, **dadurch gekennzeichnet, dass** das Reinigungsmedium ein oder mehrere Moleküle/Ionen/Radikale enthält, die aus ClO-; ClO"; HClO; OH-; HO₂"; H₂O₂; O₃; S₂O₈^{2'}; Cl₂; Cl-; HO₂-; O₂; O₂-; ₃O₂; ₁O₂; O- ; H₃O; H-; Cl₂O; ClO₂; HCl; Cl₂O₇; H₂SO₄; und HSO₃ ausgewählt sind, und der pH 2 bis 8, bevorzugt 7, beträgt und das Redoxpotential +300 mV bis +1200 mV beträgt.

12. Verfahren nach einem der Ansprüche 9 oder 10, **dadurch gekennzeichnet, dass** es sich bei dem Reinigungsmittel um NADES (Konzentrat) handelt.

13. Verfahren nach einem der Ansprüche 1 bis 11, **dadurch gekennzeichnet, dass** es sich bei dem Getränk (35) um Bier handelt.

14. Verfahren nach einem der Ansprüche 1 bis 11, **dadurch gekennzeichnet, dass** es sich bei dem Getränk (35) um Mineralwasser, Saft, Wein, Spirituosen, sonstige alkoholhaltige Getränke, alkoholfreie Mischgetränke oder Milch handelt.
